# EUROPEAN PATENT SPECIFICATION

(11) **EP 0 730 261 B1**
(45) Date of publication and mention of the grant of the patent: **16.01.2002**
(21) Application number: 96301394.1
(22) Date of filing: 29.02.1996
(51) Int. Cl.: G10L 13/04, G10L 15/26

(54) **An interactive speech recognition device**
Interaktive Spracherkennungsvorrichtung
Dispositif interactif de reconnaissance de la parole

(30) Priority: 01.03.1995 JP 4200595; 18.12.1995 JP 32935295
(43) Date of publication of application: 04.09.1996
(73) Proprietor: SEIKO EPSON CORPORATION, Tokyo 163 (JP)
(72) Inventor: Edatsune, Isao, c/o Seiko Epson Corp., Suwa-shi, Nagano-ken 392 (JP)
(74) Representative: Sturt, Clifford Mark

(56) References cited:
- WO-A-87/06487
- WO-A-93/06575
- US-A- 4 923 428
- US-A- 5 029 214

## Description

The present invention relates to an interactive speech recognition device that recognises speech and produces sounds or actions in response to the recognition result.

One example of this kind of interactive speech recognition device is a speech recognition toy. For example, in the speech recognition toy disclosed in Japanese patent application No. H62-253093, multiple instructions that will be used as speech instructions are pre-registered as recognition-target phrases. The speech signal issued by the child who is using the toy is compared to the speech signals that have been registered, and when there is a match, the electrical signal pre-specified for the speech instruction is output and causes the toy to perform a specified action.

US 4923428 discloses an interactive talking toy which talks and moves under microprocessor control on the basis of program material selected from a storage device in the body of the toy. The program material selected is determined by a human's response to questions asked by the toy. The toy has limited word recognition capabilities.

US 5029214 discloses a talking toy with simulated emotions which are affected by what the doll hears and which influences what the doll says.

However, in this type of conventional toys, such as stuffed toy animals, that issue phrases or perform specified actions based on the speech recognition result, the recognition result is often different from the actual word or phrase issued by the speaker; and even when the recognition result is correct, the toys usually cannot respond or return phrases that accommodate changes in the prevailing conditions or environment.

Nowadays, sophisticated actions are required even of toys. For example, a child will quickly tire of a stuffed toy animal if it responds with "Good morning" when a child says "Good morning" to it regardless of the time of day. Furthermore, because this type of interactive speech recognition technology possesses the potential of being applied to game machines for older children or even to consumer appliances and instruments, development of more, advanced technologies have been desired.

Therefore, an object of the present invention is to provide an interactive speech recognition device that possesses a function for detecting changes in circumstances or environment, e.g., time of day, that can respond to the speech issued by the user by taking into account the change in circumstances or environment, and that enables more sophisticated interactions.

According to the present invention, there is provided an interactive speech recognition device for recognising and responding to input speech comprising:
a speech analysing means for analysing input speech by comparing it to pre-registered speech patterns and for creating a speech data pattern;
a speech recognition means for recognising the input speech by analysing the speech data pattern and deriving recognition data;
a speech output means for outputting a response to said input speech using said recognition data; and characterised by
a variable data detection means comprising a timing means for detecting time data; and
a coefficient setting means for generating a weighting coefficient that corresponds to the time of day for each of the pre-registered speech patterns and providing said speech recognition means with said coefficients thereby enabling the recognition data accuracy to be improved.

Preferred embodiments are as set forth in the dependent claims.

Embodiments of the present invention will now be described with reference to the accompanying drawings, of which the invention is explained in detail below using working examples. Note that the invention has been applied to a toy in these working examples, and more particularly to a stuffed toy dog intended for small children.
Figure 1 is a block diagram showing the overall configuration of the stuffed toy dog of Working example 1 of the present invention;
Figure 2 is a block diagram showing the overall configuration of Working example 2 of the present invention;
Figure 3 is a block diagram showing the overall configuration of Working example 3 of the present invention;
Figure 4 is a block diagram showing the overall configuration of Working example 4 of the invention;
Figure 5 is a block diagram showing the overall configuration of Working example 5 of the present invention; and
Figure 6 is a block diagram showing the overall configuration of Working example 6 of the invention.

The invention is explained in detail below using working examples. Note that the invention has been applied to a toy in these working examples, and more particularly to a stuffed toy dog intended for small children.

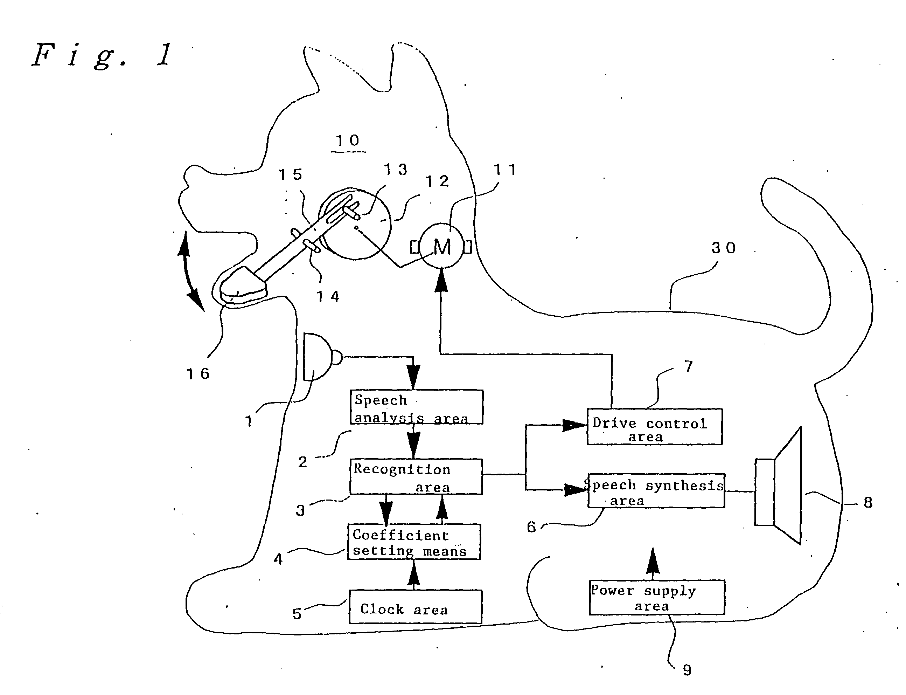

In working example 1, weighting coefficients are set up for the recognition data of pre-registered recognition target speeches according to the value of the variable data (e.g., time of day, temperature, weather, and date) that affects the interaction content, in order to improve the recognition rate when a greeting phrase is input. Figure 1 is a configuration diagram that explains Working example 1 of the present invention. The configuration will be briefly explained first, and the individual functions will be explained in detail later in the document. Note that working example 1 uses time of day as said variable data that affects the content of the interaction.

In Figure 1, the interior of stuffed toy dog 30 is provided with a microphone 1 for entering speeches from outside. A speech analysis area 2 is provided for analysing the speech that is input from said microphone 1 and for generating a speech pattern that matches the characteristics volume of the input speech. There is a clock area 5 which is a timing means for outputting timing data such as the time at which said speech is input and the time at which this speech input is recognised by the speech recognition area described below. A coefficient setting area 4 into which the time data from said clock area 5 is input and that generates weighting coefficients that change over time, in correspondence with the content of each recognition target speech. A speech recognition area 3 into which the speech data pattern of the input speech output by said speech analysis area 2 is input, that at the same time obtains a weighting coefficient in effect for a registered recognition target speech at the time from said speech recognition area 4, that computes the final recognition data by multiplying the recognition data corresponding to each recognition target speech by its corresponding weighting coefficient, that recognises said input speech based on the computed final recognition data, and that outputs the final recognition data of the recognised speech. Speech synthesis area 6 for outputting the speech synthesis data that corresponds to the final recognition data recognised by taking said coefficient from said speech recognition area 3 into consideration. Drive control area 7 for driving a motion mechanism 10 which moves the mouth, etc. of the stuffed toy 30 according to the drive condition that are predetermined in correspondence to the recognition data recognised by said speech recognition area 3. A speaker 8 for outputting the content of the speech synthesised by said speech synthesis area 6 to the outside. Finally, there is a power supply area 9 for driving all of the above areas.

Said speech recognition area 3 in the example uses a neural network that handles a non-specific speaker, as its recognition means. However, the recognition means is not limited to the method that handles a non-specific speaker, and other known methods such as a method that handles a specific speaker, DP matching, and HMM, can be used as the recognition means.

In said motion mechanism 10, a motor 11 rotates based on the drive signal (which matches the length of the output signal from speech synthesis area 6) output by drive control area 7, and when cam 12 rotates in conjunction with motor 11, a protrusionshaped rib 13 provided on cam 12 moves in a circular trace in conjunction with the rotation of cam 12. Crank 15 which uses axis 14 as a fulcrum is clipped on rib 13, and moves a lower jaw 16 of the stuffed toy dog up and down synchronously with the rotation of the cam 12.

In this configuration, the speech that is input from the microphone 1 is analysed by speech analysis area 2, and a speech data pattern matching the characteristic volume of the input speech is created. This speech data pattern is input into the input area of the neural network provided in speech recognition area 3, and is recognised as explained below.

The explanation below is based on an example in which several greeting words or phrases are recognised. For example, greeting phrases such as "Good morning," "I'm leaving," "Good day," "I'm home," and "good night" are used here for explanation,

Suppose that a phrase "Good morning" issued by a non-specific speaker is input into microphone 1. The characteristics of this speaker's "Good morning" are analysed by speech analysis area 2 and are input into speech recognition area 3 as a speech data pattern.

At the same time at which the phrase "Good morning" is input from microphone 1 was detected as sound pressure, the data related to the time at which the phrase "Good morning" was recognised by the neural network of speech recognition area 3 is supplied from clock area 5 to coefficient setting area 4. Note that the time to be referenced by coefficient setting area 4 is the time the speech was recognised by speech recognition area 3 in this case.

Said speech data pattern of "Good morning" that was input into the neural network of speech recognition area 3 in this way is output from the output area of the neural network as recognition data possessing a value, instead of binary data. Here, an example in which this value is a number between 0 and 10 possessing a floating point is used for explanation.

When the speaker says "Good morning" to the stuffed toy 30, the neural network of speech recognition area 5 outputs a recognition data value of 8.0 for "Good morning," 1.0 for "I'm leaving," 2.0 for "Good day," 1.0 for "I'm home," and 4.0 for "Good night." The fact that the recognition data from the neural network for the speaker's "Good morning" is a high value of 8.0 is understandable. The reason why the recognition data value for "Good night" is relatively high compared to those for "I'm leaving," "Good day," and "I'm home" is presumed to be because the speech pattern data of "Good morning" and "Good night" of a non-specific speaker, analysed by speech analysis area 2, are somewhat similar to each other. Therefore, although the probability is nearly non-existent that the speaker's "Good morning" will be recognised as "I'm leaving," "Good day," or "I'm home," the probability is high that the speaker's "Good morning" will be recognised as "Good night."

During this process, speech recognition area 3 fetches the weighting coefficient preassigned to a recognition target speech by referencing coefficient setting area 4, and multiplies the recognition data by this coefficient. Because different greeting phrases are used depending on the time of day, weighting coefficients are assigned to various greeting phrases based on the time of day. For example, if the current time is 7.00 am, 1.0 will be used as the weighting coefficient for "Good morning," 0.9 for "I'm leaving," 0.7 for "Good day," 0.6 for "I'm home," and 0.5 for "Good night," and these relationships among recognition target speeches, time of day, and coefficients are stored in coefficient setting area 4 in advance.

When weighting coefficients are used in this way, the final recognition data of "Good morning" will be 8.0 (i.e., 8.0 X 1.0) since the recognition data for "Good morning" output by the neural network is 8.0 and the coefficient for "Good morning" at 7.00 a.m. is 1.0. Likewise, the final recognition data for "I'm leaving" will be 0.9 (i.e., 1.0 X 0.9), the final recognition data for "Good day" will be 1.4 (i.e., 2.0 X 0.7), the final recognition data for "I'm home" will be 0.6 (i.e., 1.0 X 0.6), and the final recognition data for "Good night" will be 2.0 (i.e. 4.0 C 0.5). In this way, speech recognition area 3 creates final recognition data by taking time-dependent weighting coefficients into consideration.

When the final recognition data area determined by taking time-dependent weighting coefficients into consideration in this way, the final recognition data for "Good morning" is four times larger than that for "Good night. " As a result, speech recognition area 3 can accurately recognise the phrase "Good morning" when it is issued by the speaker. Note that the number of phrases that can be recognised can be set to any value.

The final recognition data of the phrase "Good morning" determined in this way is input into speech synthesis area 6 and drive control area 7. Speech synthesis area 6 converts the final recognition data from speech recognition area 3 to pre-determined speech synthesis data, and outputs that speech synthesis output from speaker 8. For example, "Good morning" will be output from speaker 8 in response to the final recognition data of the phrase "Good morning" in this case. That is, when the child playing with the stuffed toy says "Good morning" to the toy, the toy responds with "Good morning." This is because the phrase issued and the time of day match each other since the child says "Good morning" at 7.00 a.m. As a result "Good morning" is correctly recognised and an appropriate response is returned.

At the same time, drive control area 7 drives individual action mechanisms according to the drive conditions pre-determined for said final recognition data. Here, the mouth of the stuffed toy dog 30 is moved synchronously with the output signal ("Good morning" in this case) from speech synthesis area 6. Naturally, in addition to moving the mouth of the stuffed toy, it is possible to move any other areas, such as shaking the head or tail, for example.

Next, a case in which the current time is 8.00 p.m. is explained. In this case, 0.5 is set as the weighting coefficient for "Good morning," 0.6 for "I'm leaving," 0.7 for "Good day," 0.9 for "I'm home," and 1.0 for "Good night."

When weighting coefficients are used in this way, the final recognition data of "Good morning" will be 4.0 (i.e., 8.0 X 0.5) since the recognition data for "Good morning" output by the neural network is 8.0 and the weighting coefficient for "Good morning" at 8.00 p.m. is 0.5. Likewise, the final recognition data for "I'm leaving" will be 0.6 (i.e., 1.0 X 0.6), the final recognition data for "Good day" will be 1.4 (i.e. 2.0 X 0.7), the final recognition data for "I'm home" will be 0.9 (i.e., 1.0 X 0.9), and the final recognition data for "Good night" will be 4.0 (i.e., 4.0 X 1.0).

In this way, speech recognition area 3 creates final recognition data by taking weighting coefficients into consideration. Since the final recognition data for both "Good morning" and "Good night" are 4.0, the two phrases cannot be differentiated. In other words, when the speaker says "Good morning" at 8.00 p.m., it is not possible to determine whether the phrase is "Good morning" or "Good night."

This final recognition data is supplied to speech synthesis area 6 and drive control area 7, both of which act accordingly. That is speech synthesis area 6 converts the final recognition data to a pre-determined ambiguous speech synthesis data and outputs it. For example, "Something is funny here!" is output from speaker 8, indicating that "Good morning" is not appropriate for use at night time.

At the same time, drive control area 7 drives individual action mechanisms according to the drive conditions pre-determined for said final recognition data. Here, the mouth of the stuffed toy dog is moved synchronously with the output signal ("Something is funny here!" in this case) from speech synthesis area 3. Naturally, in addition to moving the mouth of the stuffed toy, it is possible to move any other areas, as in the case above.

Next, a case in which the speaker says "Good night" when the current time if 8.00 p.m. is explained. In this case, it is assumed that the neural network of speech recognition area 3 outputs a recognition data value of 4.0 for "Good morning," 1.0 for "I'm leaving," 2.0 for "Good day," 1.0 for "I'm home," and 8.0 for "Good night." When the current time is 8.00 pm, 0.5 will be used as the weighting coefficient for "Good morning," 0.6 for "I'm leaving," 0.7 for "Good day," 0.9 for "I'm home," and 1.0 for "Good night,". When weighting coefficients are used in this way, the final recognition data of "Good morning" will be 2.0 (i.e., 4.0 X 0.5) since the recognition data for "Good morning" output by the neural network is 4.0 and the weighting coefficient for "Good morning" at 8.00 pm is 0.5. Likewise, the final recognition data for "I'm leaving" will be 0.9 (i.e. 1.0 X 0.9), the final recognition data for "Good day" will be 1.4 (i.e., 2.0 X 0.7), the final recognition data for "I'm home" will be 0.6 (I.e. 1.0 X 0.6), and the final recognition data for "Good night" will be 8.0 (i.e., 8.0 X 1.0). In this way, speech recognition area 3 creates final recognition data by taking weighting coefficients into consideration.

When the final recognition data is determined by taking time-related information into consideration in this way, the final recognition data for "Good night" is four times larger than that for "Good morning.". As a result, speech recognition area 3 can accurately recognise the phrase "Good night" when it is issued by the speaker.

The final recognition data of the phrase "Good night" determined in this way is input into speech synthesis area 6 and device control area 7. Speech synthesis area 6 converts the final recognition data from speech recognition area 5 to pre-determined speech synthesis data, and outputs that speech synthesis output from speaker 7. For example, "Good night" will be output from speaker 8 in response to the final recognition data of the phrase "Good night" in this case.

Although the response from the stuffed toy 30 is "Good morning" or "Good night" in response to the speaker's "Good morning" or "Good night", respectively, in the above explanation, it is possible to set many kinds of phrases as the response. For example, "You're up early today" can be used in response to "Good morning."

Furthermore, although the time of day was used as the variable data for setting weighting coefficients in Working example 1, it is also possible to set weighting coefficients based on other data such as temperature, weather, and date. For example, if temperature is used as the variable data, temperature data is detected from a temperature sensor that measures the air temperature, and weighting coefficients are assigned to the recognition data for weather-related greeting phrases (e.g., "It's hot, isn't it?" or "It's cold, isn't it?") that are input and to other registered recognition data. In this way, the difference in the values of the two recognition data is magnified by their weighting coefficients even if a speech data pattern that is similar to the input speech exists, thus increasing the recognition rate. Furthermore, if a combination of variable data such as time of day, temperature, weather, and date, is used and weighting coefficients are assigned to these variable data, the recognition rate for various greeting phrases can be increased even further.

### Working example 2)

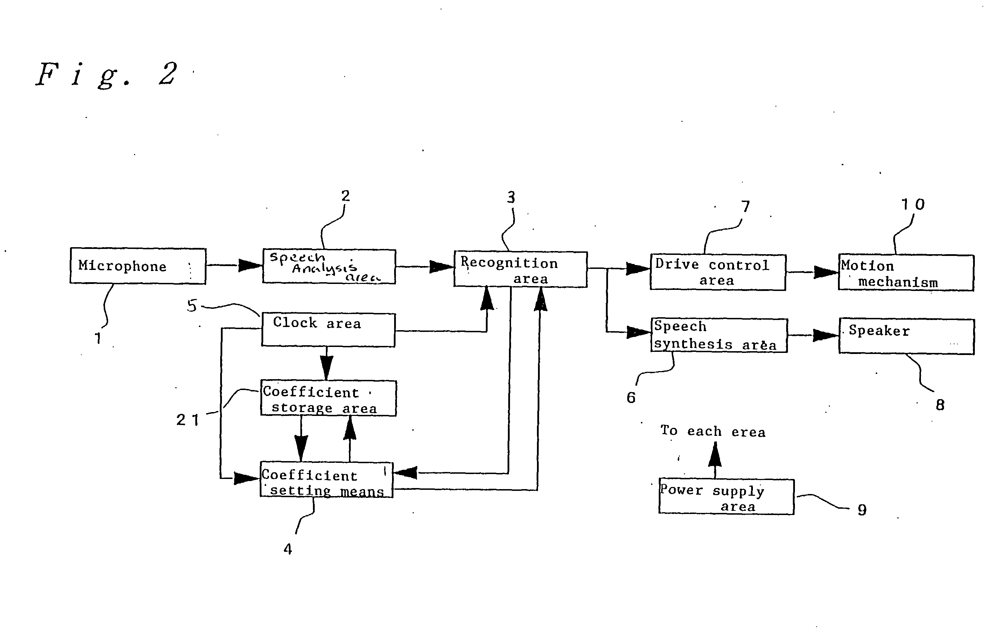

Next, Working example 2 of the present invention will be explained with reference to Figure 2. Note that the stuffed toy dog 30, motion mechanism 10 for moving the mouth of the stuffed toy, etc. are omitted from Figure 2. Figure 2 is different from Figure 1 in that a memory area 21 is provided for storing the weighting coefficients for recognisable phrases that are set by coefficient setting area 4 according to time data. Since all other configuration elements are identical as in Figure 1, like symbols are used to represent like parts. The processing between memory area 21 and coefficient setting area 4 will be explained later.

In Figure 2, the speech that is input from microphone 1 is analysed by speech analysis area 2, and a speech data pattern matching the characteristic volume of the input speech is created. This speech data pattern is input into the input area of the neural network provided in speech recognition area 3, and is recognised as explained below.

The explanation below is based on an example in which several greeting words or phrases are recognised. For example, greeting phrases such as "Good morning," "I'm leaving," "Good day," "I'm home," and "Good night" are used here for explanation.

Suppose that a phrase "Good morning" issued by a non-specific speaker is input into microphone 1. The characteristics of this speaker's "Good morning" are analysed by speech analysis area 2 and are input into speech recognition area 3 as a speech data pattern.

At the same time at which the phrase "Good morning" input from microphone 1 was detected as sound pressure, the data related to the time at which the phrase "Good morning" is recognised by the neural network of speech recognition area 3 was supplied from clock area 5 to coefficient setting area 4. Note that the time to be referenced by coefficient setting area 4 is the time the speech was recognised by speech recognition area 3 in this case.

Said speech data pattern of "Good morning" that was input into the neural network of speech recognition area 3 in this way is output from the output area of the neural network as recognition data possessing a value instead of binary data. Here, an example in which this value is a number between 0 and 10 possessing a floating point is used for explanation.

When the speaker says "Good morning" to the stuffed toy 30, the neural network of speech recognition area 3 outputs a recognition data value of 8.0 for "Good morning," 1.0 for "I'm leaving," 2.0 for "Good day," 1.0 for "I'm home," and 4.0 for "Good night." " The fact that the recognition data from the neural network for the speaker's "Good morning" is a high value of 8.0 is understandable. The reason why the recognition data value for "Good night" is relatively high compared to those for "I'm leaving," "Good day," and "I'm home" is presumed to be because the speech pattern data of "Good morning" and "Good night" of a non-specific speaker, analysed by speech analysis area 2, are somewhat similar to each other. Therefore, although the probability is nearly non-existent that the speaker's "Good morning" will be recognised as "I'm leaving," "Good day," or "I'm home," the probability is high that the speaker's "Good morning" will be recognised as "Good night." Up to this point, Working example 2 is nearly identical to Working example 1.

Speech recognition area 3 fetches the weighting coefficient assigned to a recognition target speech according to time data by referencing coefficient setting area 4. However, in Working example 2, memory area 21 is connected to coefficient setting area 4, and the content (weighting coefficients) stored in memory area 21 is referenced by coefficient setting area 4. Note that coefficient setting area 4 outputs a large weighting coefficient to the recognition data of a phrase if the phrase occurs at the time of day it was most frequently recognised, and outputs a smaller weighting coefficient to the recognition data of the phrase as the phrase occurs away from said time of day. In other words, the largest weighting coefficient is assigned to the recognition data when the phrase occurs at the time of day with the highest usage frequency, and a smaller weighting coefficient is assigned to the recognition data as the phrase occurs away from said time of day.

For example, if it is assumed that the current time is 7.00 am, and that 1.0 is used as the initial weighting coefficient for "Good morning," 0.9 for "I'm leaving," 0.7 for "Good day," 0.6 for "I'm home," and 0.5 for "Good night," and these coefficients are stored in memory area 21, the final recognition data of "Good morning" will be 8.0 (i.e., 8.0 X 1.0) since the recognition data for "Good morning" output by the neural network is 8.0 and the coefficient for "Good morning" fetched from memory area 21 at 7.00 am is 1.0. Likewise, the final recognition data will be 0.9 for "I'm leaving," 1.4 for "Good day," 0.6 for "I'm home," and 2.0 for "Good night." These final recognition data are initially created by speech recognition area 3.

Even when recognition is performed by taking into consideration the weighting coefficient based on the time of day, there is some range of time in which a certain phrase will be correctly recognised. For example, the phrase "Good morning" may be correctly recognised at 7.00 a.m., 7.30 am, or 8.00 a.m. By taking this factor into consideration, memory area 21 stores the largest weighting coefficient for a phrase when it occurs at the time of day with the highest usage frequency based on the time data for recognising that phrase in the past, and stores a smaller weighting coefficient for the phrase as it occurs away from said time of day.

For example, if the phrase "Good morning" was most frequently recognised at 7.00 am according to the past statistics, the coefficient to be applied to the recognition data of "Good morning" is set the largest when the time data indicates 7.00 a.m., and smaller as the time data deviates farther away from 7.00 a.m. That is, the coefficient is set at 1.0 for 7.00 a.m., 0.9 for 8.00 am, and 0.8 for 9.00 a.m., for example. The time data used for setting coefficients is statistically created based on several past time data instead of just one time data. Note that the coefficients during the initial setting are set to standard values for pre-determined times of day. That is, in the initial state, the weighting coefficient for "Good morning" at 7.00 a.m. is set to 1.0.

The coefficient of the "Good morning" that is most recently recognised is input into memory area 21 as a new coefficient data along with the time data, and memory area 21 updates the coefficient for the phrase based on this data and past data as needed.

By making the coefficient for a phrase the largest at the time of day when it is used most frequently, when the phrase "Good morning" is issued at around 7.00 am, the final recognition data of "Good morning" will be 8.0 (i.e., 8.0 X 1.0) since the recognition data for "Good morning" output by the neural network is 8.0 and the coefficient for "Good morning" fetched from memory area 21 at 7.00 am is 1.0. Since this final recognition data is at least four times larger than those of other phrases, the phrase "Good morning" is correctly recognised by speech recognition area 3.

The final recognition data of the phrase "Good morning" determined in this way is input into speech synthesis area 6 and drive control area 7. Speech synthesis area 6 converts the final recognition data from speech recognition area 3 to pre-determined speech synthesis data, and a pre-set phrase such as "Good morning" or "You're up early today" is returned through speaker 8 embedded in the body of the stuffed toy dog, as a response to the speaker's "Good morning."

On the other hand, if "Good morning" is issued at around 12 noon, the coefficient for "Good morning" becomes small, making the final recognition data for "Good morning" small, and "Good morning" will not be recognised. In such a case, speech synthesis area 6 is programmed to issue a corresponding phrase as in Working example 1, and a response such as "Something is funny here!" is issued by stuffed toy 30.

### (Working example 3)

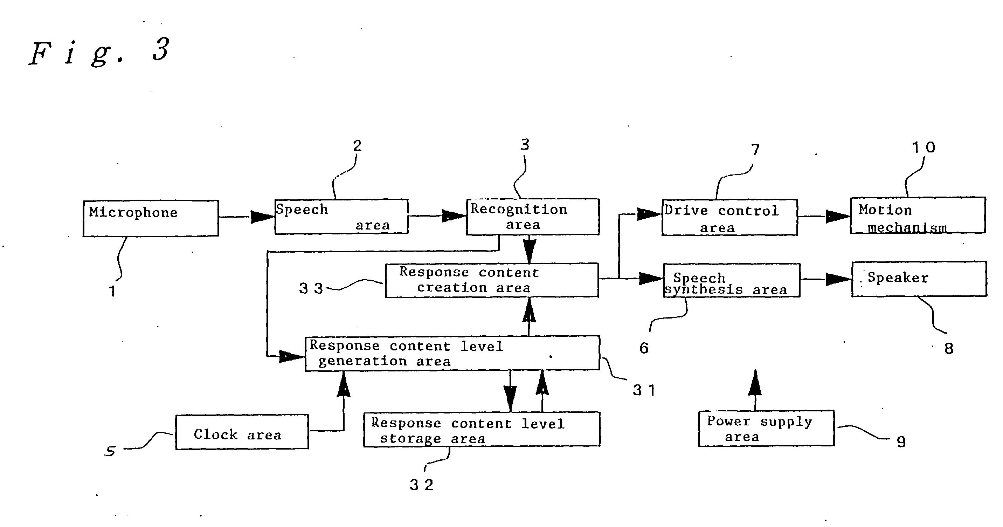

Next, Working example 3 of the present invention will be explained with reference to Figure 3. Note that the stuffed toy dog 30, the motion mechanism 10 for moving the mouth of the stuffed toy, etc. shown in Figure 1 are omitted from Figure 3. Working example 3 is provided with microphone 1 for entering speeches from outside, speech analysis area 2 for analysing the speech that is input from said microphone 1 and for generating a speech pattern that matches the characteristic volume of the input speech; clock area 5 for outputting timing data; speech recognition area 3 for outputting the recognition data for said input speech based on the speech data pattern output by said speech analysis area 2; speech synthesis area 6 for outputting the speech synthesis data that corresponds to the final recognition data recognised by taking said coefficient from said speech recognition area 3 into consideration; drive control area 7 for the driving motion mechanism 10 (see Figure 1) which moves the mouth, etc. of the stuffed toy 30 according to the drive condition that are predetermined in correspondence to the recognition data recognised by said speech recognition area 3; speaker 8 for outputting the content of the speech synthesised by said speech synthesis area 6 to the outside; and power supply area 9 for driving all of the above areas; and is additionally provided with response content level generation area 31; response content level storage area 32; and response content creation area 33.

Said speech recognition area 3 in the example uses a neural network that handles a non-specific speaker, as its recognition means. However, the recognition means is not limited to the method that handles a non-specific speaker, and other known methods such as a method that handles a specific speaker, DP matching, and HMM, can be used as the recognition means.

Said response content level generation area 31 generates response level values for increasing the level of response content as time passes or as the number of recognitions by speech recognition area 3 increases. Response content level storage area 32 stores the relationship between the response level generated by response content level generation area 31 and time. That is, the relationship between the passage of time and level value is stored, e.g., level 1 when the activation switch is turned on for the first time after the stuffed toy is purchased, level 2 after 24 hours pass, and level 3 after 24 more hours pass.

When it receives the final recognition data from speech recognition area 3, said response content creation area 33 references said response content level generation area 31 and determines response content that corresponds to the response control level value. During this process, response content level generation area 31 fetches the response content level that corresponds to the time data from response content level storage area 32. For example, response content level 1 is fetched if the current time is within the first 24 hours after the switch was turned on for the first time, and level 2 is fetched if the current time is between 24th and 48th hours.

Response content creation area 33 then creates recognition data possessing the response content that corresponds tot he fetched response content level, based on the recognition data from speech recognition area 3. For example, "Bow-wow" is returned for recognition data "Good morning" when the response content level (hereafter simply referred to as "level") is 1, broken "G-o-o-d mor-ning" for level 2, "Good morning" for level 3, and "Good morning. It's a nice day, isn't it ? for a higher level n. In this way, both the response content and level are increased as time passes. The response data created by said response content creation area 33 is synthesised into speech by speech synthesis area 6 and is output from speaker 8.

Suppose that a phrase "Good morning" issued by a non-specific speaker is input into microphone 1. The characteristics of this speaker's "Good morning" are analysed by speech analysis area 2 and are input into speech recognition area 3 as a speech data pattern.

Said speech data pattern of "Good morning" that was input into the neural network of speech recognition area 3 in this way is output from the output area of the neural network as a recognition data possessing a value, instead of a binary data. If the recognition data for the phrase "Good morning" is higher than those recognition data for other phrases, speech recognition area 3 correctly recognises the speaker's "Good morning" as "Good morning."

The recognition data for the phrase "Good morning" thus identified is input into response content creation area 33. Response content creation area 33 then determines the response content for the input recognition data, based on the input recognition data and the content of response content level generation area 31.

As explained above, the response level value from said response content level generation area 31 is used for gradually increasing the level of response content in response to the phrase issued by the speaker; and in this case, the level is increased as time passes based on the time data of clock area 3. However, it is also possible to change the level value based on the number or types of phrases recognised, instead of the passage of time. Alternatively, it is possible to change the level value based on the combination of the passage of time and the number or types of phrases recognised.

Working example 3 is characterised in that it provides an illusion that the stuffed toy is growing up like a living creature as time passes. In other words, the stuffed toy can only respond with "Bow-wow" to "Good morning" on the first day after being purchased because the response level is only 1. However, on the second day, it can respond with "G-o-o-d morning" to "Good morning" on the second day because the response level is 2. Furthermore, after several days, the stuffed toy can respond with "It's a nice day, isn't it?" to "Good morning" because of a higher level.

Although the unit of time for increasing the response content by one level was set at 1 day (24 hours) in the above explanation, the unit is not limited to 1 day, and it is possible to use a longer or shorter time span for increasing the level. Note that it will be possible to any reset level increase if a reset switch for resetting the level is provided. For example, it will be possible to reset the level back to the initial value when level 3 has been reached.

Although the above explanation was provided for the response to the phrase "Good morning," it is not limited to "Good morning" and is naturally applicable to upgrading of responses to other phrases such as "Good night" and "I'm leaving." Take "Good night" for example. The content of the response from the stuffed toy in reply to "Good night" can be changed from "Unn-unn" (puppy cry) in level 1, to "G-o-o-d nigh-t" in level 2.

By increasing the level of response content in this way, the stuffed toy dog can be made to appear to be changing the content of its response as it grows. The toy can then be made to act like a living creature by making it respond differently as time passes even when the same phrase "Good morning" is recognised. Further more, the toy is not boring because it responds with different phrases even when the speaker says the same thing.

Working example 3 is also useful for training the speaker to find out the best way to speak to the toy in order to obtain a high recognition rate when the toy's response content level value is still low. That is, when the speaker does not pronounce "Good morning" in a correct way, the "Good morning" will not be easily recognised, often resulting in a low recognition rate. However, if the toy responds with "Bow-wow" to "Good morning," this means that the "Good morning" was correctly recognised. therefore, if the speaker practices to speak in a recognisable manner early on, the speaker learns how to speak to be recognised. Consequently, the speaker's phrases will be recognised at high rates even when the response content level value increases, resulting in smooth interactions.

### (Working example 4)

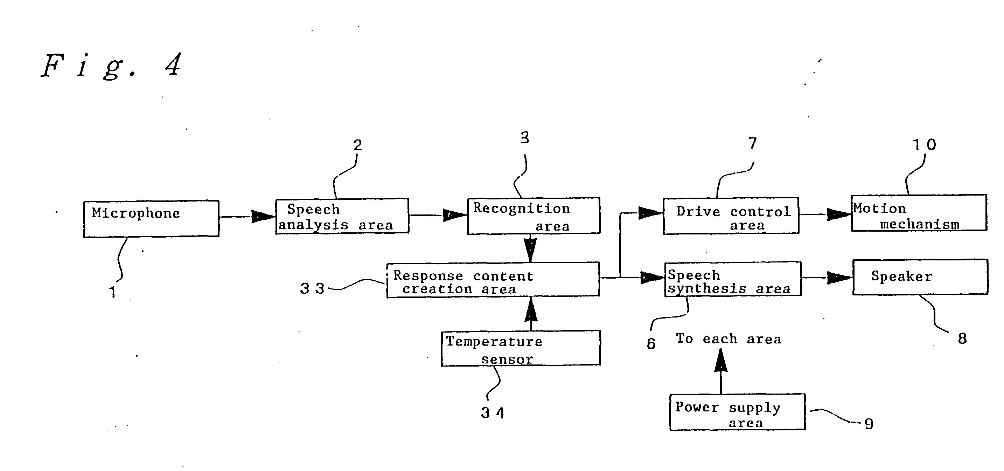

Next, Working example 4 of the invention will be explained with reference to Figure 4. Note that stuffed toy dog 30, motion mechanism 10 for moving the mouth of the stuffed toy, etc. shown in Figure 1 are omitted from Figure 4. In Working example 4 temperature is detected as one of the variable data that affect the interaction, and the change in temperature is used for changing the content of the response from response content creation area 33 shown in Working example 3 above. Temperature sensor 34 is provided in Figure 4, and like symbols are used to represent like parts as in Figure 3. When it receives the recognition data from speech recognition area 3, said response content creation area 33 determines the response content for stuffed toy 30 based on the recognition data and the temperature data from temperature sensor 34. The specific processing details will be explained later in the document.

In Figure 4, the speech that is input from microphone 1 is analysed by speech analysis area 2, and a speech data pattern matching the characteristic volume of the input speech is created. This speech data pattern is input into the input area of the neural network provided in speech recognition area 3, and is recognised as a speech.

Suppose that a phrase "Good morning" issued by a non-specific speaker is input into microphone 1. The characteristics of this speaker's "God morning" are analysed by speech analysis area 2 and are input into speech recognition area 3 as a speech data pattern.

Said speech data pattern of "Good morning" that was input into the neural network of speech recognition area 3 in this way is output from the output area of the neural network as a recognition data possessing a value, instead of a binary data. If the recognition data for the phrase "Good morning" is higher than those recognition data for other phrases, speech recognition area 3 correctly recognises the speaker's "Good morning" as "Good morning."

The recognition data for the phrase "Good morning" thus recognised is input into response content creation area 33. Response content creation area 33 then determines the response content for the input recognition data, based on the input recognition data and the temperature data from temperature sensor 34.

Therefore, the data content of the response to the recognition data that is output by speech recognition area 3 can be created according to the current temperature. For example, suppose that the speaker's "Good morning" is correctly recognised by speech recognition area 3 as "Good morning." Response content creation area 33 then creates response data "Good morning. It's a bit cold, isn't it?" in reply to the recognition data "Good morning" if the current temperature is low. On the other hand, response data "Good morning. It's a bit hot, isn't it?" is created in reply to the same recognition data "Good morning" if the current temperature is higher. The response data related by response content creation area 33 is input into speech synthesis area 6 and drive control area 7. The speech data input into synthesis area 6 is converted into speech synthesis data, and is output by speaker 8 embedded in the body of the stuffed toy dog. The recognition data input into drive control area 7 drives motion mechanism 10 (see Figure 1) according to the corresponding pre-determined drive condition and moves the mouth of the stuffed toy while the response is being issued.

In this way, the stuffed toy dog can be made to behave as if it sensed a change in the temperature in its environment and responded accordingly. The toy can then be made to act like a living creature by making it respond differently as the surrounding temperature changes even when the same phrase "Good morning" is recognised. Furthermore, the toy is not boring because it responds with different phrases even when the speaker says the same thing.

### Working example 5)

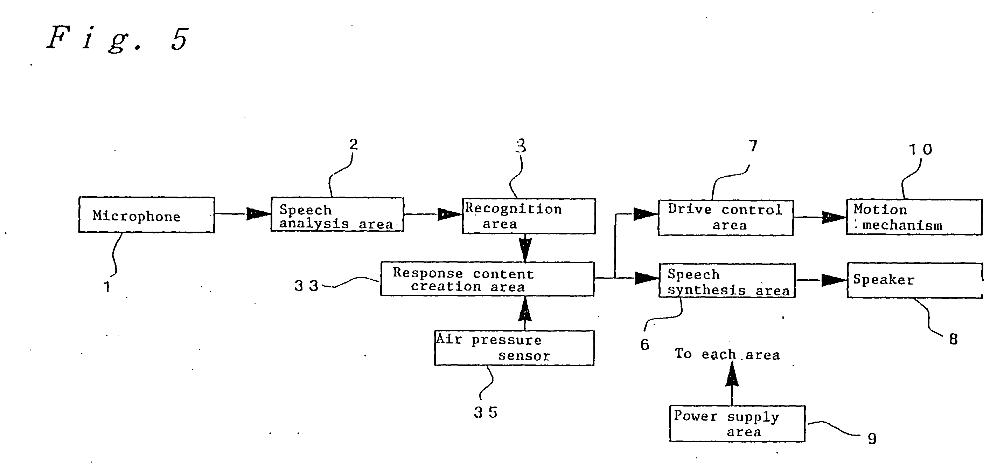

Next, Working example 5 of the invention will be explained with reference to Figure 5. Note that stuffed toy dog 30, motion mechanism 10 for moving the mouth of the stuffed toy, etc. shown in Figure 1 are omitted from Figure 5. In Working example 5, air pressure is detected as one of the variable data that affect the interaction, and the change in air pressure (good or bad weather) is used for changing the content of the response from response content creation area 33 shown in Working example 3 above. Air pressure sensor 35 is provided in Figure 5, and like symbols are used to represent like parts as in Figure 3. Said response content creation area 33 receives the recognition data from speech recognition area 3, and determines the response content for the stuffed toy based on the recognition data and the air pressure from air pressure sensor 35 and the specific processing details will be explained later in the document.

In Figure 5, the speech that is input from microphone 1 is analysed by speech analysis area 2, and a speech data pattern matching the characteristic volume of the input speech is created. This speech data pattern is input into the input area of the neural network provided in speech recognition area 3, and is recognised as speech.

Suppose that a phrase "Good morning" issued by a non-specific speaker is input into microphone 1. The characteristics of this speaker's "Good morning" are analysed by speech analysis area 2 and are input into speech recognition area 3 as a speech data pattern.

Said speech data pattern of "Good morning" that was input into the neural network of speech recognition area 3 in this way is output from the output area of the neural network as a recognition data possessing a value, instead of a binary data. If the recognition data for the phrase "Good morning" is higher than those recognition data for other phrases, speech recognition area 3 correctly recognises the speaker's "Good morning" as "Good morning."

The recognition data for the phrase "Good morning" thus recognised is input into response content creation area 33. Response content creation area 33 then determines the response content for the input recognition data, based on the input recognition data and the air pressure data from air pressure sensor 3.

Therefore, the data content of the response to the recognition data that is output by speech recognition area 3 can be created according to the current air pressure. For example, suppose that the speaker's "Good morning is correctly recognised by speech recognition area 3 as "Good morning." Response content creation area 33 then creates response data "Good morning, the weather is going to get worse today." in reply to the recognition data "Good morning" if the air pressure has fallen. On the other hand, response data "Good morning. The weather is going to get better today." is created in reply to the recognition data "Good morning" if the air pressure has risen. The response data created by response content creation area 33 is input into speech synthesis area 6 and drive control area 7. The speech data input into synthesis area 6 is converted into speech synthesis data, and is output by speaker 8 embedded in the body of the stuffed toy dog. The recognition data input into drive control area 7 drives motion mechanism 10 (see Figure 1) according to the corresponding pre-determined drive condition and moves the mouth of the stuffed toy while the response is being issued.

In this way, the stuffed toy dog can be made to behave as if it sensed a change in the air pressure in its environment and responded accordingly. The toy can then be made to act like a living creature by making it respond differently as the air pressure changes even when the same phrase "Good morning" is recognised. Furthermore, the toy is not boring because it responds with different phrases even when the speaker says the same thing.

### (Working example 6)

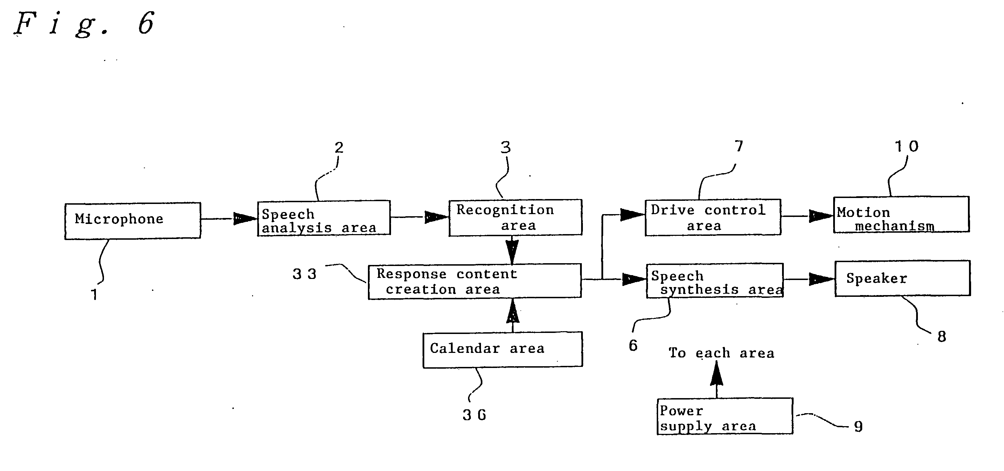

Next, Working example 6 of the invention will be explained with reference to Figure 6. Note that stuffed toy dog 30, motion mechanism 10 for moving the mouth of the stuffed toy, etc. shown in Figure 1 are omitted from Figure 6. In Working example 6, calendar data is detected as one of the variable data that affect the interaction, and the change in calendar data (change in date) is used for changing the content of the response. The configuration in Figure 6 is different from those in Figures 4 and 5 in that calendar area 36 is provided in place of temperature sensor 34 or air pressure sensor 35, and like symbols are used to represent like parts as in Figures 4 or 5. Note that said calendar area 36 updates the calendar by referencing the time data from the clock area (not shown in the figure). Response content creation area 33 in Working example 6 receives speech recognition data from speech recognition area 3, and determines the response content for the stuffed toy based on the recognition data and the calendar data from calendar area 36. The specific processing details will be explained later in the document.

In Figure 6, the speech that is input from microphone 1 is analysed by speech analysis area 2, and a speech data pattern matching the characteristic volume of the input speech is created. This speech data pattern is input into the input area of the neural network provided in speech recognition area 3 and is recognised as a speech.

Suppose that a phrase "Good morning" issued by a non-specific speaker is input into microphone 1. The characteristics of this speaker's "Good morning" are analysed by speech analysis area 2 and are input into speech recognition area 3 as a speech data pattern.

Said speech data pattern of "Good morning" that was input into the neural network of speech recognition area 3 in this way is output from the output area of the neural network as a recognition data possessing a value, instead of a binary data. If the recognition data for the phrase "Good morning" is higher than those recognition data for other phrases, speech recognition area 3 correctly recognises the speaker's "Good morning" as "Good morning."

The recognition data for the phrase "Good morning" thus recognised is input into response content creation area 33. Response content creation area 33 then determines the response content for the input recognition data based on the input recognition data and the calendar data (date information which can also include year data) from calendar area 36.

Therefore, the data content of the response to the recognition data that is output by speech recognition area 5 can be created according to the current date. For example, suppose that the speaker's "Good morning" is correctly recognised by speech recognition area 3 as "Good morning." Response content creation area 33 then creates response data "Good morning. Please take me to cherry blossom viewing." in reply to the recognition data "Good morning" if the calendar data shows April 1. On the other hand, response data "Good morning. Christmas is coming soon. " is created in reply to the same recognition data "Good morning" if the calendar data shows December 23. Naturally, it is possible to create a response that is different from the previous year if the year data is available.

The response data created by response content creation area 33 is input into speech synthesis area 6 and drive control area 7. The speech data input into synthesis area 6 is converted into speech synthesis data, and is output by speaker 8 embedded in the body of the stuffed toy dog. The recognition data input into drive control area 7 drives motion mechanism 10 (see Figure 1) according to the corresponding pre-determined drive condition and moves the mouth of the stuffed toy while the response is being issued.

In this way, the stuffed toy dog can be made to behave as if it sensed a change in the date and responded accordingly. The toy can then by made to act like a living creature by making it respond differently as the date changes even when the same phrase "Good morning" is recognised. Furthermore, the toy is not boring because it responds with different phrases even when the speaker says the same thing.

Although several working examples were used for explaining the present invention, the invention can be widely applied to electronic instruments that are used daily, such as personal digital assistants and interactive games, in addition to toys. Furthermore, in the third and subsequent working examples, speech recognition area 3 can obtain the final recognition that using weighting coefficients that take into consideration the appropriateness of the content of the speaker's phrase relative to a variable data such as time of day as in Working example 1 or 2, or can obtain the final recognition data using some other method. For example, if the final recognition data is obtained as in Working example 1 or 2 and the response content for this final recognition data is processed as explained in Working examples 3 through 6, the speaker's phrases can be successfully recognised at high rates, and the response to the speaker's phrases can match the prevailing condition much better. Additionally, by using all of the response content processes explained in Working examples 3 through 6 or in some combinations, the response can match the prevailing condition much better. For example, if Working example 2 is combined with Working example 3, and the temperature sensor, the air pressure sensor, and the calendar area explained in Working examples 4 through 6 are added, accurate speech recognition can be performed that takes into consideration appropriateness of the content of the speaker's phrase relative to time of day, and it is possible to enjoy changes in the level of the response content from the stuffed toy as time passes. Furthermore, interactions that take into account information such as temperature, weather, and date become possible, and thus an extremely sophisticated interactive speech recognition device can be realised.

Thus, the interactive speech recognition device of the present invention generates a weighting coefficient that changes as variable data changes by matching the content of each recognition target speech, and outputs recognition data from a speech recognition means by taking this weighting coefficient into consideration. Therefore, even if the recognition target speeches contain speech data patterns possessing similar input speech patterns, said weighting coefficient can assign higher priority to the recognition data of the input speech than to other catalogued recognition data. As a result, greeting phrases related to time of day, weather, date, etc. are recognised by considering the prevailing condition, thus significantly improving the recognition rates.

Furthermore since at least time data is used as the variable data, a weighting coefficient that changes as time data changes is generated by matching the content of each recognition target speech, and recognition data is output from a speech recognition means by taking this weighting coefficient into consideration. Therefore, the recognition rates can be significantly improved for time-related greeting phrases such as "Good morning" and "Good night" that are used frequently.

Additionally, since at least time data is used as the variable data, the time at which an input speech is correctly recognised by said speech recognition means is taken from said clock means so that the weighting coefficient for said speech is changed according to the time data for the correct recognition. Thus input speeches are recognised based on the recognition data calculated by taking the weighting coefficient into consideration. Therefore, the recognition rates can be significantly improved for time-related greeting phrases such as "Good morning" and "Good night" that are used frequently. Furthermore, the time at which input speech is correctly recognised is always detected, and a weighting coefficient is determined based on the past recognition items of said speech, and thus it becomes possible to set weighting coefficients that match the actual usage conditions.

Time data and/or the recognition count data for correct recognition by said speech recognition means are input, the response content level for changing the response content for the input speech is generated based on the input data, and a response content that matches this response level is output. Therefore, the response content level can be changed in stages in response to the phrase issued by the speaker. For example, when the invention is used in a stuffed toy animal, the increasing response content level gives the illusion that the toy animal is growing and changing its response as it grows. The toy can then be made to act like a living creature by making it respond differently as time passes even when the same phrase "Good morning" for example is recognised. Furthermore the invention provides an excellent effect in that the toy is not boring because it responds with different phrases even when the speaker says the same thing. Additionally, the invention provides the effect of enabling smooth interaction because the speaker's phrases will necessarily be recognised at higher rates when the response content level value increases, if the speaker learns to speak to the toy in recognisable ways when the toy's response content level value is still low.

Additionally, variable data which detects variable data that affects the response content is detected, and response content that takes this variable data into consideration is output. Therefore, sophisticated interactions become possible that correspond to various situational changes.

The temperature of the surrounding environment may be measured as said variable data, and the response content is output based on this temperature data. Therefore, sophisticated interactions become possible that tailor the response to the prevailing temperature.

The air pressure of the surrounding environment may be measured as said variable data, and the response content is output based on this air pressure data. Therefore, sophisticated interactions become possible that tailor the response to the prevailing weather condition.

Finally, calendar data may be used as said variable data, and the response content is output based on this calendar data. Therefore, sophisticated interactions become possible that tailor the response to the calendar.

## Claims

1. An interactive speech recognition device for recognising and responding to input speech comprising:
a speech analysing means (2) for analysing input speech by comparing it to pre-registered speech patterns and for creating a speech data pattern;
a speech recognition means (3) for recognising the input speech by analysing the speech data pattern and deriving recognition data;
a speech output means (6-8) for outputting a response to said input speech using said recognition data; and **characterised by**
a variable data detection means (5) comprising a timing means for detecting time data; and
a coefficient setting means (4) for generating a weighting coefficient that corresponds to the time of day for each of the pre-registered speech patterns and providing said speech recognition means with said coefficients thereby enabling the recognition data accuracy to be improved.

2. An interactive speech recognition device according to claim 1, in which the time at which an input speech is correctly recognised by said speech recognition means is fetched from said timing means, the weighting coefficient for the recognition data is given the largest value if the input speech occurs at a time at which it was correctly recognised most frequently in the past, and a smaller weighting coefficient is given as the time deviates from this peak time, based on the time data for the correct recognition.

3. An interactive speech recognition device according to claim 2, in which said variable data detection means comprises a temperature sensor that measures the temperature of the usage environment and outputs the temperature data, and said speech output means outputs the response by taking said temperature data into consideration.

4. An interactive speech recognition device according to claim 2, in which said variable data detection means comprises an air pressure sensor that measures the air pressure of the usage environment and outputs the air pressure data, and said speech output means outputs the response by taking said air pressure data into consideration.

5. An interactive speech recognition device according to claim 2, in which said variable data detection means comprises a calendar detection means that detects calendar data and outputs the calendar data, and said speech output means outputs the response by taking said calendar data into consideration.

6. An interactive speech recognition device as claimed in any one of claims 3 to 5, in which said variable data detection means comprises two or more of a temperature sensor, air pressure sensor or calendar detection means.

## Patentansprüche

1. Interaktive Spracherkennungsvorrichtung für die Erkennung und Beantwortung von eingegebener Sprache, umfassend:
ein Sprachanalysemittel (2) zum Analysieren eingegebener Sprache durch Vergleichen derselben mit vorher registrierten Sprachmustern und zum Erzeugen eines Sprachdatenmusters;
ein Spracherkennungsmittel (3) zum Erkennen der eingegebenen Sprache durch Analysieren des Sprachdatenmusters und zum Ableiten von Erkennungsdaten;
ein Sprachausgabemittel (6-8) zum Ausgeben einer Antwort auf die eingegebene Sprache unter Verwendung der Erkennungsdaten; und **gekennzeichnet durch**
ein Variablendaten-Erfassungsmittel (5), das ein Zeitsteuermittel zum Erfassen von Zeitdaten umfaßt; und
ein Koeffizienten-Setzmittel (4) zum Erzeugen eines Gewichtungskoeffizienten, der der Tageszeit entspricht, für jedes der vorher registrierten Sprachmuster und zum Liefern der Koeffizienten an das Spracherkennungsmittel, um somit die Verbesserung der Erkennungsdatengenauigkeit zu ermöglichen.

2. Interaktive Spracherkennungsvorrichtung nach Anspruch 1, in der der Zeitpunkt, zu dem eine eingegebene Sprache vom Spracherkennungsmittel richtig erkannt wird, vom Zeitsteuermittel geholt wird, wobei auf der Grundlage der Zeitdaten für die richtige Erkennung dem Gewichtungskoeffizienten für die Erkennungsdaten der größte Wert zugewiesen wird, wenn die eingegebene Sprache zu einem Zeitpunkt auftritt, zu dem sie in der Vergangenheit am häufigsten richtig erkannt worden ist, und wobei ein kleinerer Gewichtungskoeffizient vergeben wird, wenn der Zeitpunkt vom diesem Hauptzeitpunkt abweicht.

3. Interaktive Spracherkennungsvorrichtung nach Anspruch 2, in der das Variablendaten-Erfassungsmittel einen Temperatursensor umfaßt, der die Temperatur der Gebrauchsumgebung mißt und die Temperaturdaten ausgibt, wobei das Sprachausgabemittel die Antwort unter Berücksichtigung der Temperaturdaten ausgibt.

4. Interaktive Spracherkennungsvorrichtung nach Anspruch 2, in der das Variablendaten-Erfassungsmittel einen Luftdrucksensor umfaßt, der den Luftdruck der Gebrauchsumgebung mißt und die Luftdruckdaten ausgibt, wobei das Sprachausgabemittel die Antwort unter Berücksichtigung der Luftdruckdaten ausgibt.

5. Interaktive Spracherkennungsvorrichtung nach Anspruch 2, in der das Variablendaten-Erfassungsmittel ein Kalenderdaten-Erfassungsmittel umfaßt, das Kalenderdaten erfaßt und die Kalenderdaten ausgibt, wobei das Sprachausgabemittel die Antwort unter Berücksichtigung der Kalenderdaten ausgibt.

6. Interaktive Spracherkennungsvorrichtung nach irgendeinem der Ansprüche 3 bis 5, in der das Variablendaten-Erfassungsmittel einen Temperatursensor und/oder einen Luftdrucksensor und/oder ein Kalenderdaten-Erfassungsmittel umfaßt.

## Revendications

1. Dispositif de reconnaissance vocale interactif pour reconnaître et répondre à une voix en entrée comprenant :
un moyen d'analyse vocale (2) pour analyser la voix en entrée en la comparant à des modèles vocaux préenregistrés et pour créer un modèle de données vocales ;
un moyen de reconnaissance vocale (3) pour reconnaître la voix en entrée en analysant le modèle de données vocales et pour obtenir les données de reconnaissance ;
un moyen de sortie vocale (6 à 8) pour sortir une réponse à ladite voix en entrée en utilisant lesdites données de reconnaissance ; et **caractérisé par**
un moyen de détection de données variables (5) comprenant un moyen de cadencement pour détecter des données de cadencement ; et
un moyen d'établissement de coefficient (4) pour générer un coefficient de pondération qui correspond à l'heure du jour pour chacun des modèles vocaux préenregistrés et pour délivrer audit moyen de reconnaissance vocale lesdits coefficients permettant de ce fait que la précision des données de reconnaissance soit améliorée.

2. Dispositif de reconnaissance vocale interactif selon la revendication 1, dans lequel l'heure à laquelle une voix en entrée est correctement reconnue par ledit moyen de reconnaissance vocale est extraite à partir dudit moyen de cadencement, le coefficient de pondération pour les données de reconnaissance reçoit la valeur la plus grande si la voix en entrée se produit à un moment auquel elle a été correctement reconnue le plus fréquemment dans le passé et un coefficient de pondération plus petit est donné à mesure que le temps dévie de ce temps crête, basé sur les données d'heure pour la reconnaissance correcte.

3. Dispositif de reconnaissance vocale interactif selon la revendication 2, dans lequel ledit moyen de détection de données variable comprend un capteur de température qui mesure la température de l'environnement d'utilisation et sort les données de température et ledit moyen de sortie vocale sort la réponse en prenant lesdites données de température en compte.

4. Dispositif de reconnaissance vocale interactif selon la revendication 2, dans lequel le moyen de détection de données variable comprend un capteur de pression d'air qui mesure la pression de l'air de l'environnement d'utilisation et sort les données de pression d'air et ledit moyen de sortie vocale sort la réponse en prenant en compte lesdites données de pression d'air.

5. Dispositif de reconnaissance vocale interactif selon la revendication 2, dans lequel ledit moyen de détection de données variable comprend un moyen de détection de calendrier qui détecte les données de calendrier et sort les données de calendrier et ledit moyen de sortie vocale sort la réponse en prenant en compte lesdites données de calendrier.

6. Dispositif de reconnaissance vocale interactif selon l'une quelconque des revendications 3 à 5, dans lequel ledit moyen de détection de données variable comprend deux ou plus d'un capteur de température, d'un capteur de pression d'air ou d'un moyen de détection de calendrier.
